# DEMANDE DE BREVET EUROPEEN

(11) **EP 3 799 964 A1**
(43) Date de publication de la demande: **07.04.2021**
(21) Numéro de dépôt: 19200948.8
(22) Date de dépôt: 02.10.2019
(51) Int. Cl.: B05D 1/02, B05D 1/08, B05D 1/26, B05D 1/34, B05D 3/02, B05D 3/06, C23C 24/00, B22F 3/105, B33Y 10/00, B33Y 30/00, B29C 64/153, G04B 31/008, G04C 15/00

(54) **PROCDEDE DE FABRICATION D'UNE PIECE MECANIQUE EPILAMEE**

(71) Demandeur: ETA SA Manufacture Horlogère Suisse, 2540 Grenchen (CH)
(72) Inventeur: HUOT-MARCHAND, Sylvain, CH-2743 Eschert (CH)
(74) Mandataire: ICB SA

(57) **Abrégé**

L'invention concerne un procédé de fabrication d'une pièce mécanique épilamée (2) comprenant un substrat (4) dans un premier matériau, le procédé comprenant au moins :
- une étape (10) de dépôt sur le substrat (4) d'un produit épilame (6) constitué d'un deuxième matériau, ledit dépôt étant effectué sous forme d'une projection sur le substrat (4) d'au moins un faisceau (12 ; 12A, 12B) collimaté ou localisé de matière contenant le produit épilame (6) ; et
- une étape (11) de traitement du deuxième matériau pour assurer la cohésion des composants sur le substrat (4).

## Description

### DOMAINE TECHNIQUE DE L'INVENTION

L'invention concerne un procédé de fabrication d'une pièce mécanique épilamée.

L'invention concerne également une pièce mécanique épilamée obtenue selon un tel procédé de fabrication. La pièce mécanique, qui comprend un substrat sur lequel une couche d'épilame est déposée, est par exemple une pièce d'horlogerie, typiquement une platine, une levée d'ancre, une roue, un balancier ou encore un axe.

### ETAT DE LA TECHNIQUE

Dans le domaine des composants mécaniques en contact frictionnel et en déplacement relatif, tel que par exemple le domaine de l'horlogerie, le bon fonctionnement des pièces mécaniques dépend entre autres de leur lubrification. La fonction principale d'un lubrifiant ainsi utilisé est de séparer les surfaces en contact en déplacement relatif tout en réduisant les dissipations d'énergie et l'usure.

Les lubrifiants utilisés se répartissent principalement entre deux catégories : les lubrifiants fluides et les lubrifiants utilisant une lubrification dite solide de mécanismes. Les lubrifiants solides, qui possèdent généralement une structure lamellaire, sont moins utilisés dans le domaine de l'horlogerie que les lubrifiants fluides, car ils sont intrinsèquement générateurs de débris. De tels lubrifiants solides présentent ainsi l'inconvénient de provoquer des usures mécaniques à plus ou moins long terme. Or de telles usures, difficilement prévisibles, s'avèrent très préjudiciables pour la fiabilité d'un mouvement horloger.

Les lubrifiants fluides se présentent généralement sous la forme de graisses ou d'huiles plus ou moins visqueuses. Ils présentent l'avantage d'être plus faciles et plus rapides à appliquer que les lubrifiants solides. Le volume de lubrifiant à employer est en outre plus facilement contrôlable. Les caractéristiques physiques des huiles (viscosité, mouillabilité, etc.) permettent la lubrification de plusieurs zones fonctionnelles d'un mécanisme, indépendamment de la complexité de ce dernier. L'énergie générée par échauffement est principalement dissipée par l'huile. Un film d'huile se reforme généralement, même après rupture et avec un volume utilisé faible. Le fluide doit autant que possible rester confiné dans les zones fonctionnelles alors qu'il tend naturellement à s'étaler. La durabilité du lubrifiant dépend ainsi de son maintien dans la zone de fonctionnement : tout horloger a cependant constaté qu'une goutte de lubrifiant s'étale rapidement sur une pièce propre. Si cette aptitude s'avère bénéfique puisque toutes les zones sensibles d'un mécanisme sont effectivement recouvertes, elle peut également s'avérer préjudiciable au bon fonctionnement de l'ensemble. En effet, une perte d'huile dans des régions critiques, typiquement des zones de contact et de déplacement relatif des pièces (zones fonctionnelles), accentuée par une dégradation potentielle de celle-ci dans des conditions de fonctionnement sévères, peut provoquer des avaries irréversibles. En outre, le lubrifiant peut se placer à des endroits indésirables et causer des problèmes d'adhésion ou, plus généralement, des problèmes esthétiques.

L'étalement des lubrifiants fluides, qu'ils se présentent sous forme d'huiles ou de graisses, pose donc un problème majeur pour le fonctionnement des mécanismes horlogers. Dans le cas des graisses, on assiste en effet très souvent à une démixtion entre le savon et l'huile de base. Cette dernière va donc pouvoir migrer sur les surfaces de la pièce et quitter les zones fonctionnelles, ce qui ramène au problème évoqué ci-dessus pour les lubrifiants fluides sous forme d'huiles. De manière générale, un lubrifiant fluide tient en place quand sa tension superficielle est plus haute que celle du support sur lequel il est déposé. Si la tension superficielle du lubrifiant est trop basse, l'huile s'étale et ne reste pas à sa place.

Afin de résoudre ce problème, les horlogers déposent sur leurs composants un revêtement appelé épilame. Cet épilame, qui se présente souvent sous forme d'une couche moléculaire invisible oléophobe, est un produit qui diminue la tension superficielle apparente du support. Il convient de noter que la tension de surface donnée par un épilame est de l'ordre de 20 à 30 mN/m tandis que la tension de surface d'une huile horlogère est typiquement de 35 mN/m. Cette différence de 5 à 15 mN/m donne une forme de goutte avec un angle de raccordement acceptable pour les horlogers. Il est généralement de l'ordre de 25 à 60. Cela permet de garder le lubrifiant dans la zone voulue. Un angle plus important peut conduire à un déplacement non voulu (bille de lubrifiant roulant sur la surface comme l'eau sur du Gore-Tex™ neuf par exemple).

Cet épilame peut être déposé de plusieurs façons mais le procédé majoritairement connu pour ce faire consiste à tremper la pièce mécanique à épilamer dans une solution composée d'un solvant et d'une certaine quantité de molécules qui se déposeront sur la surface de la pièce de façon à modifier sa tension de surface. Le solvant est ensuite évaporé au cours d'une étape suivante, laissant seule la couche moléculaire de molécules déposée. L'épilame recouvre alors la totalité de la surface de la pièce. Dans les premiers instants de fonctionnement et dans les zones de frottement, l'épilame est éliminé par abrasion, laissant une surface que le lubrifiant peut mouiller. Certains mécanismes critiques comme l'échappement peuvent être laissés à fonctionner pendant une durée minimale pour que se produise cette abrasion de l'épilame. Une fois cette opération terminée, une nouvelle lubrification est effectuée. Le lubrifiant mouille alors les surfaces où l'abrasion a été réalisée exactement à l'endroit de frottement.

Toutefois, un des inconvénients majeurs d'un tel procédé de dépôt par trempage est lié au fait qu'il requiert de tremper une grande quantité de pièces dans des bains dont les concentrations en molécules "actives" diminuent, ce qui impose un suivi régulier de process et qui entraine un possible risque technique d'avoir une concentration trop faible et donc un effet épilame trop faible. De plus les solvants d'épilamage à bases de composés fluorés mis en œuvre par ce procédé contreviennent souvent aux normes en vigueur notamment prévues pour lutter contre l'émission de gaz à effet de serre. Et enfin, ce procédé prévoit notamment une concentration trop importante de molécules "actives" ou un solvant plus écologique mais moins volatil qui peut causer des taches lors de l'opération d'épilamage. Or elles peuvent être localisées loin des zones fonctionnelles et donc ne pas nécessiter d'épilamage.

En outre, un tel procédé est susceptible de provoquer des problèmes esthétiques sur la pièce, du fait d'une mauvaise évaporation du solvant et/ou de défauts de concentration dans l'épilame. Plus généralement, un tel procédé de dépôt par trempage global est relativement imprécis car non localisé, et n'épargne pas les zones de contact.

### RESUMÉ DE L'INVENTION

L'invention a donc pour but de fournir un procédé de fabrication d'une pièce mécanique épilamée permettant un dépôt local d'épilame sur la pièce afin de délimiter des zones précises de confinement d'un lubrifiant, et ce de manière simple et peu coûteuse.

A cet effet, l'invention concerne un procédé de fabrication d'une pièce mécanique épilamée, qui comprend les caractéristiques mentionnées dans la revendication indépendante 1.

Des formes particulières du procédé sont définies dans les revendications dépendantes 2 à 16.

Grâce à l'étape de dépôt sous forme de projection sur le substrat d'au moins un faisceau collimaté ou localisé de matière contenant le produit épilame, le procédé selon l'invention permet un dépôt d'épilame sur la pièce très précis, tant en volume de fluide déposé qu'en localisation. On comprend ainsi que, contrairement aux procédés de l'art antérieur, le fin cordon d'épilame est ici déposé localement sur la pièce, ce qui permet de confiner le lubrifiant dans une zone délimitée par le cordon déposé. La surface ainsi délimitée est alors parfaitement mouillée par le lubrifiant, garantissant un fonctionnement parfait pour la pièce pour autant que la zone délimitée corresponde à au moins une zone fonctionnelle visée. Il est à noter que, dans le cadre de la présente invention, le produit épilame déposé peut indifféremment être un produit épilame entrainant une accroche ou une répulsion de lubrifiant par effet physique, par effet chimique, ou encore via une combinaison entre ces deux effets.

Avantageusement, l'étape de dépôt comprend une phase de nébulisation d'une encre contenant le produit épilame sous forme de solution ou de suspension de particules, et une phase de projection de l'encre nébulisée sur le substrat de la pièce ; et l'étape de traitement du deuxième matériau comprend une phase de durcissement dudit deuxième matériau. Ce procédé correspond au procédé dit AJP (de l'anglais « Aerosol Jet Printing »). On notera dans une alternative, que certaines encres ne nécessitaient pas d'étape de durcissement par exemple par réticulation à proprement parler. Un bref instant à l'air libre suffit pour que le solvant s'évapore et que la résine réticule "toute seule". Un tel procédé offre une très grande variété dans le choix de matériaux possibles pour le dépôt de produit épilame, et permet un dépôt très précis, notamment à l'échelle micrométrique sur des pièces planes mais aussi flexibles et/ou tridimensionnelles.

Selon une caractéristique technique particulière de l'invention, la phase de durcissement consiste en un traitement thermique qui comporte au moins une étape de recuit et/ou une étape de frittage localisé et/ou une étape de mise sous vide. Ceci permet d'accélérer le processus de solidification. Dans le cas d'un produit épilame contenant des composants actifs sous forme solide et pulvérulents, un tel traitement thermique permet en outre de fondre le matériau pour assurer la cohésion entre les grains.

Selon une autre caractéristique technique particulière de l'invention, l'étape de frittage localisé est obtenue par irradiation dudit deuxième matériau au moyen d'un laser.

Selon une autre caractéristique technique particulière de l'invention, la phase de durcissement consiste en une polymérisation par photo-réticulation et/ou par réticulation chimique.

Selon une autre caractéristique technique particulière de l'invention, la phase de polymérisation par photo-réticulation est obtenue par la projection d'ultraviolets sur la matière contenant le produit épilame, à une longueur d'onde prédéterminée.

Selon une autre caractéristique technique particulière de l'invention, l'étape de traitement dudit deuxième matériau comprend au moins une des phases suivantes :
- une phase de modification de la structure chimique de la matière contenant le produit épilame, notamment une phase d'implantation ionique ;
- une phase de modification de la structure cristallographique de la matière contenant le produit épilame, notamment une phase de traitement thermique localisé par laser ;
- une phase de modification de la rugosité de la matière contenant le produit épilame, notamment une phase de traitement par laser.

Selon un mode de réalisation de l'invention, le dépôt du produit épilame est effectué sous forme d'une projection sur le substrat d'un cordon localisé de matière contenant le produit épilame, ledit cordon étant un cordon continu ou discontinu.

Avantageusement, le cordon localisé de matière présente une largeur d'au moins 10 µm, de préférence d'au moins 15 µm.

Selon un autre mode de réalisation de l'invention, le dépôt du produit épilame est effectué sous forme d'une projection sur le substrat de deux faisceaux collimatés ou localisés de matériau liquide, au moins un des matériaux liquides contenant le produit épilame, les deux matériaux liquides projetés par les faisceaux étant choisis de sorte à provoquer une solidification lorsque mis en contact l'un avec l'autre.

Selon une première variante de réalisation de l'invention, lors de l'étape de dépôt, la projection sur le substrat d'au moins un faisceau collimaté ou localisé de matière contenant le produit épilame est effectuée au moyen d'au moins une buse de projection fixe, la ou chaque buse de projection étant configurée pour projeter sensiblement verticalement, du haut vers le bas, un faisceau collimaté ou localisé de matière ; l'orientation et/ou la position dans l'espace du substrat étant modifiée(s) au cours de l'étape de dépôt. Une telle configuration, mettant en œuvre une projection verticale de matière du haut vers le bas, améliore la précision du dépôt de produit épilame, ce qui permet de garantir que le dépôt est réalisé à l'endroit précis souhaité sur la pièce.

Selon une deuxième variante de réalisation de l'invention, lors de l'étape de dépôt, la projection sur le substrat d'au moins un faisceau collimaté ou localisé de matière contenant le produit épilame est effectuée au moyen d'au moins une buse de projection montée mobile par rapport au substrat, par exemple montée sur un robot multiaxes; le substrat étant maintenu fixe au cours de l'étape de dépôt.

Selon une caractéristique technique particulière de l'invention, le deuxième matériau est constitué d'un unique composant, notamment un polymère, plus particulièrement une résine époxy. Le polymère est typiquement un polymère photodurcissable ou un polymère thermodurcissable.

En variante, le deuxième matériau comprend plusieurs composants. Chacun des composants est typiquement sous forme liquide ou solide.

Selon une caractéristique technique particulière de l'invention, chacun des composants est choisi parmi le groupe de composants constitué de : un composant surfactant ; un solvant ; un composant présentant une fonction de répulsion physique, chimique ou mécanique ; un composant présentant une fonction esthétique ; un composant présentant une fonction destinée à favoriser la réticulation ; ou une combinaison de ceux-ci.

A cet effet, l'invention concerne également une pièce mécanique épilamée obtenue par le procédé de fabrication décrit ci-dessus, et qui comprend les caractéristiques mentionnées dans la revendication dépendante 17.

Une forme particulière de la pièce mécanique épilamée est définie dans la revendication dépendante 18.

Selon une caractéristique technique particulière de l'invention, la pièce mécanique épilamée est une pièce d'horlogerie.

### BRÈVE DESCRIPTION DES FIGURES

Les buts, avantages et caractéristiques du procédé de fabrication d'une pièce mécanique épilamée selon l'invention apparaîtront mieux dans la description suivante sur la base d'au moins une forme d'exécution non limitative illustrée par les dessins sur lesquels :
- la figure 1 est un organigramme représentant des étapes d'un procédé de fabrication d'une pièce mécanique épilamée selon l'invention ;
- la figure 2 est une vue schématique d'un système pour la mise en œuvre du procédé de la figure 1, selon un premier mode de réalisation de l'invention ;
- la figure 3 est une vue analogue à celle de la figure 2, selon un deuxième mode de réalisation de l'invention ; et
- la figure 4 est une vue en perspective d'une pièce mécanique épilamée obtenue par le procédé de la figure 1.

### DESCRIPTION DETAILLEE DE L'INVENTION

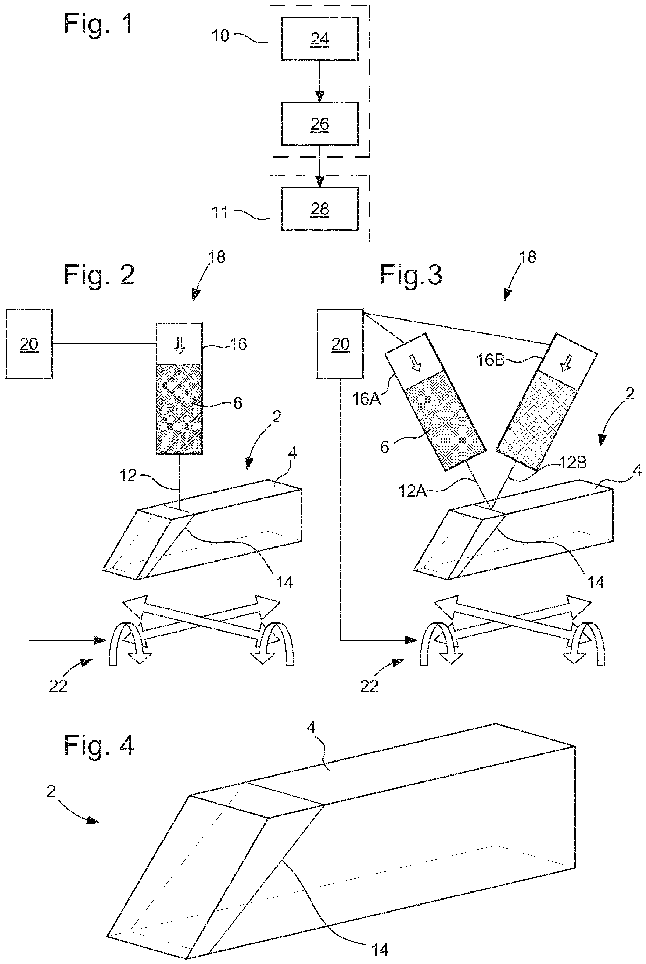

La figure 1 représente un procédé de fabrication d'une pièce mécanique épilamée 2 selon l'invention. Une telle pièce mécanique épilamée 2, qui est visible sur les figures 2 à 4, comprend un substrat 4. Ce substrat 4 est le support sur lequel le produit épilame 6 sera déposé. La pièce mécanique épilamée 2 peut être une pièce d'horlogerie, comme par exemple une platine, une levée d'ancre, une roue, un balancier ou encore un axe. La pièce 2 peut également être une pièce d'un objet utilisant des composants mécaniques ou micromécaniques en déplacement relatif et dont les contacts sont lubrifiés avec un lubrifiant fluide pouvant migrer et ainsi altérer la fonction tribologique. Bien entendu, le procédé de fabrication d'une telle pièce mécanique épilamée 2 selon l'invention peut convenir à toutes les applications utilisant un épilame.

En revenant à la figure 1, le procédé comprend une étape initiale 10 de dépôt du produit épilame 6 sur le substrat 4. Le substrat 4 est constitué d'un premier matériau, et le produit épilame 6 est constitué d'un deuxième matériau, distinct du premier matériau. Le premier matériau peut consister, par exemple, en du métal, de la céramique, du rubis, du saphir, du plastique, du diamant, du quartz, du verre, du carbure de silicium, en matériaux amorphes (par ex : verres métalliques) ou encore en une combinaison de ces derniers. Le deuxième matériau peut être constitué d'un unique composant, tel que par exemple un polymère. Le polymère est typiquement un polymère photodurcissable ou thermodurcissable, tel que par exemple une résine époxy. En variante, le deuxième matériau comprend plusieurs composants. Chacun des composants est par exemple sous forme liquide ou solide. Les composants peuvent être choisis notamment de sorte à ce que leurs fonctions soient complémentaires pour, par exemple, favoriser la réticulation, faciliter la localisation du matériau, amener une fonction propre à la répulsion du lubrifiant, amener une fonction esthétique par exemple liée à la couleur ou à la texture, amener une rugosité pour le matériau déposé, ou encore réaliser le transport du ou des composants utile(s) à la fonction finale. A ce titre, les composants peuvent être choisis parmi le groupe de composants constitué de : un composant surfactant ; un solvant ; un composant présentant une fonction de répulsion physique, chimique ou mécanique ; un composant présentant une fonction esthétique ; ou encore un composant présentant une fonction destinée à favoriser la réticulation. Un composant choisi comme solvant peut permettre de faciliter le transport du ou des autre(s) composants utile(s) à la fonction finale. Un composant choisi pour donner une pigmentation visible au produit épilame 6 peut permettre de faciliter visuellement les opérations effectuées par un opérateur, par exemple en conférant une coloration au lubrifiant.

Le procédé comprend une étape suivante 11 de traitement du deuxième matériau constituant le produit épilame 6 pour assurer la cohésion des composants sur le substrat 4 de la pièce 2.

L'étape de dépôt 10 est effectuée sous forme d'une projection sur le substrat 4 d'au moins un faisceau 12, 12A, 12B collimaté ou localisé de matière contenant le produit épilame 6. Selon un premier mode de réalisation de l'invention, illustré sur la figure 2, le dépôt est effectué sous forme d'une projection sur le substrat 4 d'un faisceau unique 12 contenant le produit épilame 6. Le faisceau 12 est par exemple configuré pour projeter sur le substrat 4 un cordon continu et localisé 14 de matière contenant le produit épilame 6. Le cordon continu 14 présente typiquement une largeur d'au moins 10 µm, de préférence d'au moins 15 µm. On notera que la largeur maximale du cordon dépend de la géométrie de la pièce et de l'esthétique voulue. À l'extrême, il est ainsi possible de revêtir complètement la pièce à l'exception de la seule zone fonctionnelle. En variante non représentée, le faisceau 12 est configuré pour projeter sur le substrat 4 un cordon discontinu et localisé de matière contenant le produit épilame, par exemple sous forme d'une suite discontinue de motifs tels que des points ou des traits.

On remarquera que le cordon doit être fermé si on veut qu'il soit confiné. A titre d'exemple, le faisceau 12 est configuré pour projeter un cordon fermé de matière contenant le produit épilame sur un substrat 4 sur lequel sont dessinés des chemins de migration par lesquels le lubrifiant se déplacerait de manière contrôlée. Cela permet de déposer le lubrifiant dans une zone facile d'accès depuis laquelle il migre vers la zone fonctionnelle visée mais moins facile d'accès.

Selon un deuxième mode de réalisation de l'invention, illustré sur la figure 3, le dépôt est effectué sous forme d'une projection sur le substrat 4 de deux faisceaux 12A, 12B collimatés ou localisés de matériau liquide. Au moins un des matériaux liquides contient le produit épilame 6. Dans l'exemple de réalisation particulier de la figure 3, seul le matériau liquide projeté par la première buse 16A contient le produit épilame 6. Les deux matériaux liquides projetés par les faisceaux 12A, 12B sont choisis de sorte à provoquer une solidification lorsque mis en contact l'un avec l'autre. C'est ici le principe de la colle bicomposant Araldite™, constituée d'une résine époxyde et d'un agent polymérisant, le 1,4,7,10-tétraazadécane. Au contact de ces deux composants, un polyépoxyde est formé.

De préférence, et comme illustré dans les deux modes de réalisation des figures 2 et 3, la projection sur le substrat 4 d'au moins un faisceau 12, 12A, 12B collimaté ou localisé de matière contenant le produit épilame 6 est effectuée au moyen d'au moins une buse de projection fixe 16, 16A, 16B. Pour ce faire un système 18 est utilisé, qui comprend, outre la ou les buse(s) 16, 16A, 16B, un dispositif 20 de commande du jet projeté par celle(s)-ci. La pièce mécanique 2 sur laquelle le produit épilame 6 est déposé est disposée sous la ou chaque buse 16, 16A, 16B, à l'aplomb de celle(s)-ci. Dans le premier mode de réalisation illustré sur la figure 2, le système 18 comprend une seule buse de projection fixe 16. Dans le deuxième mode de réalisation illustré sur la figure 3, le système 18 comprend deux buses de projection fixes 16A, 16B, chacune des buses 16A, 16B projetant un des faisceaux 12A, 12B collimatés ou localisés de matériau liquide. Dans les deux cas, la ou chaque buse de projection fixe 16, 16A, 16B est configurée pour projeter sensiblement verticalement, du haut vers le bas, un faisceau 12, 12A, 12B correspondant de matière. L'orientation et/ou la position dans l'espace de la pièce mécanique 2, et donc du substrat 4 sur lequel le produit épilame 6 est déposé, sont modifiées au cours de l'étape de dépôt 10. Pour ce faire, le système 18 comprend par exemple un dispositif 22 de positionnement multiaxes de la pièce 2, relié au dispositif de commande 20. Ceci permet de régler avec précision l'orientation et/ou la position dans l'espace de la pièce mécanique 2, via le dispositif de commande 20. Une telle configuration améliore la précision du dépôt de produit épilame 6, ce qui permet de garantir que le dépôt est réalisé à l'endroit précis souhaité sur la pièce mécanique 2.

En variante non représentée, le dispositif 22 de positionnement multiaxes est utilisé pour conférer une mobilité dans l'espace à la ou chaque buse de projection. La pièce mécanique 2, et donc le substrat 4 sur lequel le produit épilame 6 est déposé, sont alors maintenus fixes au cours de l'étape de dépôt 10, par tout moyen connu. Le dispositif de positionnement est par exemple un robot multiaxes, permettant de modifier l'orientation et/ou la position dans l'espace de la ou chaque buse selon les trois dimensions de l'espace, la ou chaque buse se déplaçant alors autour de la pièce 2.

De préférence, et bien que cela ne soit pas limitatif dans le cadre de la présente invention, l'étape de dépôt 10 comprend une phase 24 de nébulisation d'une encre contenant le produit épilame 6 sous forme de solution ou de suspension de particules, et une phase 26 de projection de l'encre nébulisée sur le substrat 4 de la pièce 2. Dans ce cas, la ou chaque buse de projection 16, 16A, 16B est reliée à une chambre de nébulisation, une telle chambre n'étant pas représentée sur les figures pour des raisons de clarté. La phase de nébulisation 24 a alors lieu dans la chambre de nébulisation, la phase de projection 26 étant effectuée par la ou les buse(s) 16, 16A, 16B, au besoin commandée(s) par le dispositif de commande 20. Les particules sont typiquement des particules micrométriques, submicroniques, ou encore nanométriques, qui présentent une fonction active du type de celles détaillées précédemment. Bien entendu, d'autres variantes de réalisation sont possibles pour l'étape de dépôt 10 sans sortir du cadre de la présente invention. On notera que cette étape de dépôt ici décrite repose sur la technologie AJP acronyme de « Aerosol Jet Printing ». Or il est possible de déposer un matériau par d'autres technologies, comme par exemple le digital printing, le crachage de goutte qui les unes proches des autres forment un cordon, etc. On comprend donc que cette étape de dépôt ne se limite donc pas uniquement à cette technologie AJP.

Lorsque l'étape de dépôt 10 comprend une phase 24 de nébulisation d'une encre et une phase 26 de projection de l'encre nébulisée sur le substrat 4, l'étape de traitement 11 comprend de préférence lorsque l'encre le requiert, une phase 28 de durcissement du deuxième matériau. On entend par « durcissement » le processus de liaison directe ou indirecte des particules pour obtenir leur cohésion. On notera que certaines encres ne nécessitent pas d'étape de durcissement par exemple par réticulation à proprement parler. Un bref instant à l'air libre suffit pour que le solvant s'évapore et que la résine réticule "toute seule".

La phase de durcissement 28 consiste par exemple en un traitement thermique du deuxième matériau, qui comporte au moins une étape de recuit et/ou une étape de frittage localisé et/ou une étape de mise sous vide. Ceci est notamment le cas lorsque le deuxième matériau est constitué d'un polymère thermodurcissable. Un tel traitement thermique permet d'accélérer le processus de solidification. Le frittage localisé est par exemple effectué par irradiation du deuxième matériau au moyen d'un laser, tel qu'un laser infrarouge par exemple. Une telle phase de durcissement naturel peut en outre comporter, avant le traitement thermique proprement dit, une étape de séchage naturel, typiquement dans le cas d'une suspension de particules dans un solvant volatil.

En variante, la phase de durcissement 28 peut consister en un durcissement artificiel obtenu via une polymérisation par photo-réticulation et/ou par réticulation chimique. Ceci est notamment le cas lorsque le deuxième matériau est constitué d'un polymère photodurcissable. La polymérisation par photo-réticulation est typiquement obtenue par la projection d'ultraviolets sur la matière contenant le produit épilame 6, à une longueur d'onde prédéterminée.

En variante encore, et plus généralement, l'étape 11 de traitement du deuxième matériau comprend au moins une des phases suivantes :
- une phase de modification de la structure chimique de la matière contenant le produit épilame 6, notamment une phase d'implantation ionique ;
- une phase de modification de la structure cristallographique de la matière contenant le produit épilame 6, notamment une phase de traitement thermique localisé par laser ; et/ou
- une phase de modification de la rugosité de la matière contenant le produit épilame 6, notamment une phase de traitement par laser.

## Revendications

1. Procédé de fabrication d'une pièce mécanique épilamée (2) comprenant un substrat (4) dans un premier matériau, le procédé comprenant au moins :
- une étape (10) de dépôt sur le substrat (4) d'un produit épilame (6) constitué d'un deuxième matériau, ledit dépôt étant effectué sous forme d'une projection sur le substrat (4) d'au moins un faisceau (12 ; 12A, 12B) collimaté ou localisé de matière contenant le produit épilame (6) ; et
- une étape (11) de traitement du deuxième matériau pour assurer la cohésion des composants sur le substrat (4).

2. Procédé de fabrication selon la revendication 1, **caractérisé en ce que** l'étape de dépôt (10) comprend une phase (24) de nébulisation d'une encre contenant le produit épilame (6) sous forme de solution ou de suspension de particules, et une phase (26) de projection de l'encre nébulisée sur le substrat (4) de la pièce (2) ; et **en ce que** l'étape (11) de traitement du deuxième matériau comprend une phase (28) de durcissement dudit deuxième matériau.

3. Procédé de fabrication selon la revendication 2, **caractérisé en ce que** la phase de durcissement (28) consiste en un traitement thermique qui comporte au moins une étape de recuit et/ou une étape de frittage localisé et/ou une étape de mise sous vide.

4. Procédé de fabrication selon la revendication 3, **caractérisé en ce que** l'étape de frittage localisé est obtenue par irradiation dudit deuxième matériau au moyen d'un laser.

5. Procédé de fabrication selon la revendication 2, **caractérisé en ce que** la phase de durcissement (28) consiste en une polymérisation par photo-réticulation et/ou par réticulation chimique.

6. Procédé de fabrication selon la revendication 5, **caractérisé en ce que** la phase de polymérisation par photo-réticulation est obtenue par la projection d'ultraviolets sur la matière contenant le produit épilame (6), à une longueur d'onde prédéterminée.

7. Procédé de fabrication selon l'une quelconque des revendications précédentes, **caractérisé en ce que** l'étape (11) de traitement dudit deuxième matériau comprend au moins une des phases suivantes :
- une phase de modification de la structure chimique de la matière contenant le produit épilame (6), notamment une phase d'implantation ionique ;
- une phase de modification de la structure cristallographique de la matière contenant le produit épilame (6), notamment une phase de traitement thermique localisé par laser ;
- une phase de modification de la rugosité de la matière contenant le produit épilame (6), notamment une phase de traitement par laser.

8. Procédé de fabrication selon l'une quelconque des revendications précédentes, **caractérisé en ce que** le dépôt du produit épilame (6) est effectué sous forme d'une projection sur le substrat (4) d'un cordon localisé (14) de matière contenant le produit épilame (6), ledit cordon (14) étant un cordon continu ou discontinu.

9. Procédé de fabrication selon la revendication 8, **caractérisé en ce que** le cordon localisé (14) de matière présente une largeur inférieure à 10 µm, de préférence sensiblement inférieure à 15 µm.

10. Procédé de fabrication selon l'une quelconque des revendications précédentes, **caractérisé en ce que** le dépôt du produit épilame (6) est effectué sous forme d'une projection sur le substrat (4) de deux faisceaux (12A, 12B) collimatés ou localisés de matériau liquide, au moins un des matériaux liquides contenant le produit épilame (6), les deux matériaux liquides projetés par les faisceaux (12A, 12B) étant choisis de sorte à provoquer une solidification lorsque mis en contact l'un avec l'autre.

11. Procédé de fabrication selon l'une quelconque des revendications précédentes, **caractérisé en ce que**, lors de l'étape de dépôt (10), la projection sur le substrat (4) d'au moins un faisceau (12 ; 12A, 12B) collimaté ou localisé de matière contenant le produit épilame (6) est effectuée au moyen d'au moins une buse de projection fixe (16 ; 16A, 16B), la ou chaque buse de projection (16; 16A, 16B) étant configurée pour projeter sensiblement verticalement, du haut vers le bas, un faisceau (12 ; 12A, 12B) collimaté ou localisé de matière ; l'orientation et/ou la position dans l'espace du substrat (4) étant modifiée(s) au cours de l'étape de dépôt (10).

12. Procédé de fabrication selon l'une quelconque des revendications 1 à 10, **caractérisé en ce que**, lors de l'étape de dépôt (10), la projection sur le substrat (4) d'au moins un faisceau (12 ; 12A, 12B) collimaté ou localisé de matière contenant le produit épilame (6) est effectuée au moyen d'au moins une buse de projection montée mobile par rapport au substrat (4), par exemple montée sur un robot multiaxes ; le substrat (4) étant maintenu fixe au cours de l'étape de dépôt (10).

13. Procédé de fabrication selon l'une quelconque des revendications précédentes, **caractérisé en ce que** le deuxième matériau est constitué d'un unique composant, notamment un polymère, plus particulièrement une résine époxy.

14. Procédé de fabrication selon l'une quelconque des revendications 1 à 12, **caractérisé en ce que** le deuxième matériau comprend plusieurs composants.

15. Procédé de fabrication selon la revendication 14, **caractérisé en ce que** chacun des composants est sous forme liquide ou solide.

16. Procédé de fabrication selon la revendication 14 ou 15, **caractérisé en ce que** chacun des composants est choisi parmi le groupe de composants constitué de : un composant surfactant ; un solvant ; un composant présentant une fonction de répulsion physique, chimique ou mécanique ; un composant présentant une fonction esthétique ; un composant présentant une fonction destinée à favoriser la réticulation ; ou une combinaison de ceux-ci.

17. Pièce mécanique épilamée (2) obtenue selon un procédé conforme à l'une quelconque des revendications précédentes.

18. Pièce mécanique (2) selon la revendication 17, **caractérisée en ce que** la pièce mécanique épilamée (2) est une pièce d'horlogerie.
